Europäisches Patentamt

European Patent Office

Office européen des brevets

(19)

(11) Numéro de publication: **0 256 071**
**B1**

(12) **FASCICULE DE BREVET EUROPEEN**

(45) Date de publication du fascicule du brevet: **05.09.90**

(51) Int. Cl.⁵: **G 05 D 23/24, H 03 L 1/04**

(21) Numéro de dépôt: **87901059.3**

(22) Date de dépôt: **03.02.87**

(86) Numéro de dépôt international:
**PCT/FR87/00031**

(87) Numéro de publication internationale:
**WO 87/04816 13.08.87 Gazette 87/18**

(54) **PERFECTIONNEMENT AU DISPOSITIF DE REGULATION THERMIQUE D'UNE ENCEINTE.**

(30) Priorité: **04.02.86 FR 8601524**
**12.12.86 FR 8617405**

(43) Date de publication de la demande:
**24.02.88 Bulletin 88/08**

(45) Mention de la délivrance du brevet:
**05.09.90 Bulletin 90/36**

(84) Etats contractants désignés:
**CH DE FR GB IT LI NL**

(56) Documents cités:
**EP-A-0 004 233**
**EP-A-0 142 410**
**DE-A-2 557 164**
**FR-A-2 536 553**
**GB-A-2 050 648**

(73) Titulaire: **COMPAGNIE D'ELECTRONIQUE ET DE PIEZO-ELECTRICITE - C.E.P.E.**
**44, rue de la Glacière**
**F-95100 Argenteuil (FR)**

(72) Inventeur: **THORAX, Didier**
**30, bld Lénine**
**F-95100 Argenteuil (FR)**
Inventeur: **MAROTEL, Gérard**
**20, avenue Condorcet**
**F-78500 Sartrouville (FR)**

(74) Mandataire: **Ruellan-Lemonnier, Brigitte et al THOMSON-CSF SCPI**
**F-92045 PARIS LA DEFENSE CEDEX 67 (FR)**

EP 0 256 071 B1

Courier Press, Leamington Spa, England.

# EP 0 256 071 B1

**Description**

La présente invention concerne les dispositifs de chauffage avec régulation thermique d'un corps quelconque, plus particulièrement d'enceintes contenant des dispositifs dont les caractéristiques de fonctionnement sont très sensibles aux variations de températures, tels que les oscillateurs à cristaux piézo-électriques.

On connaît, par le brevet européen n° 4 233 au nom de la demanderesse, un dispositif de régulation thermique d'une enceinte comprenant, d'une part un circuit de mesure de température constitué d'un pont de résistances dont une branche comprend au moins un élément thermosensible et d'un amplificateur délivrant en sortie un signal de contrôle représentatif de l'écart entre la température mesurée de l'enceinte et une température de référence, signal dont la valeur absolue est réglée par une boucle de contre-réaction, et d'autre part un circuit de chauffage de l'enceinte alimenté par une source de tension et régulé par le circuit de mesure de température. Ledit circuit de chauffage est constitué en général par au moins un circuit semiconducteur stabilisateur de tension, traversé par un courant de chauffage réglable par l'intermédiaire d'un transistor de commande soumis audit signal de contrôle. Le circuit de chauffage peut être constitué dans certains cas, par le seul transistor de commande. Dans ces deux cas, la boucle de contre-réaction de l'amplificateur de sortie du circuit de mesure de température est prélevée directement sur la sortie dudit amplificateur. Il en résulte que le gain du dispositif de régulation thermique doit être réglé pour chaque produit du fait de la dispersion des caractéristiques du transistor de commande soumis au signal de contrôle issu de l'amplificateur de sortie. On constate aussi un courant de chauffage non linéaire en fonction de la tension de commande.

En conséquence, la présente invention a pour but de remédier aux défauts constatés dans le dispositif ci-dessus.

Elle a donc pour objet un perfectionnement au dispositif de régulation thermique de l'enceinte décrit dans de brevet européen n° 4 233 qui consiste à connecter la boucle de contre-réaction de l'amplificateur de sortie du circuit de mesure de température entre d'une part le point commun entre l'émetteur du transistor de commande et sa résistance d'émetteur et d'autre part l'entrée inverseuse dudit amplificateur.

Ainsi, avec ce montage, la tension aux bornes de la résistance d'émmetteur est proportionnelle au signal appliqué sur l'entrée non-inverseuse de l'amplificateur de sortie du circuit de mesure de température.

Dans ce cas, on ne dépend plus des paramètres électriques du transistor de commande et le gain en courant est lié uniquement aux valeurs de la résistance d'émetteur, de la résistance de contreréaction et des résistances du pont de mesure. Il en résulte un bonne reproductibilité du système.

Le montage de la présente invention est utilisable dans le dispositif de régulation thermique décrit dans le brevet européen n° 4 233. Toutefois, ce montage est aussi utilisable dans des dispositifs de régulation thermique du type à action proportionelle intégrale et dérivée tels que décrits dans la demande de brevet française n° 82.19584 au nom de la demanderesse. Dans le cas de ces dispositifs de regulation, lorsque la boucle de réaction de l'amplificateur de sortie est constituée par une résistance, il est nécessaire de compenser la chute de tension aux bornes de cette résistance. Pour ce faire l'entrée inverseuse de l'amplificateur est connectée par l'intermédiare d'une résistance en sortie du générateur de tension stabilisée. Toutefois, pour éviter que l'amplificateur opérationnel à action intégrale ne sature lorsque le thermostat régule, il est nécessaire d'ajuster la valeur de la résistance prévue sur l'entrée inverseuse de l'amplificateur de sortie et le générateur de tension stabilisée en fonction de la témperature de référence.

Selon une caractéristique de la présente invention, pour supprimer ce réglage, on prévoit des moyens pour fixer automatiquement le point de fonctionnement du circuit de mesure de température quelle soit la tension de référence.

Selon un mode de réalisation préférentiel, les moyens pour fixer automatiquement le point de fonctionnement du circuit de mesure de température quelle soit la tension de référence sont constitués par une résistance fixe connectée sur l'entrée inverseuse de l'amplificateur de sortie de polarisée par une source de tension directement fonction de la tension de référence. Ainsi, la résistance fixe est reliée à la sortie d'un amplificateur différentiel recevant sur son entrée non-inverseuse la tension de référence et sur son entrée inverseuse une tension de polarisation. Selon une autre possibilité, la résistance fixe est reliée à la sortie d'un amplificateur opérationnel à action proportionelle recevant sur son entrée non-inverseuse la tension de référence et sur son entrée inverseuse une tension de polarisation.

La présente invention peut aussi être utilisé avec des circuits de chauffage tels que décrits dans la demande de brevet français n° 83.16549 au nom de la demanderesse.

Différents types de circuits semiconducteurs stabilisateurs de tension peuvent être envisagés pour le circuit de chauffage. De toute façon, le circuit stabilisateur de tension comporte au moins un élément choisi parmi une diode, une diode Zener, un transistor à effet de champ, en particulier du type MOS, un transistor bipolaire, un circuit régulateur de tension série et/ou parallèle sous forme de composants discrets ou sous forme intégrée.

Selon un mode de réalisation préférentiel, chaque circuit semiconducteur est constitué par un transistor, ce transistor a son potentiel de base fixé par un pont diviseur constitué d'une résistance et d'une diode Zener, son émetteur étant relié au collecteur du transistor du circuit semiconducteur suivant comme décrit dans le brevet européen n° 4 233. Toutefois, avec ce montage, chaque transistor de chauffage a son propre pont de polarisation, ce qui entraîne un nombre élevé de résistance et de diodes Zener ainsi qu'une consommation importante.

Aussi, selon une aure caractéristique de la présente invention, les circuits semiconducteurs stabilisateurs de tension reliés en série sont soumis à une fraction de la tension d'alimentation obtenue par un pont de résistance commun à tous les circuits semiconducteurs monté entre la tension d'alimentation et la résistance d'émetteur du transistor de commande.

Dans ce cas, la polarisation des circuits semiconducteurs plus particulièrement des transistors de chauffage, est réalisée à l'aide d'un seul pont de polarisation et cette polarisation est de plus référencée par rapport à la tension aux bornes de la résistance d'émetteur du transistor de chauffage, ce qui permet de compenser la tension collecteur-émetteur de chaque transistor en fonction du courant de chauffage. Il en résulte une répartition de puissance plus homogène en fonction du courant de chauffage.

D'autre part, pour diminuer le courant dans le pont de résistances, les transistors de chauffage sont de préférence du type Darlington.

D'autres caractéristiques et avantages de la présente invention apparaîtront à la lecture de la description de différents modes de réalisation donnés à titre d'exemples non limitatifs, cette description étant faite avec référence aux dessins ci-annexés dans lesquels:

la figure 1 est un schéma électrique d'un dispositif de régulation thermique d'une enceinte selon un premier mode de réalisation de la présente invention,

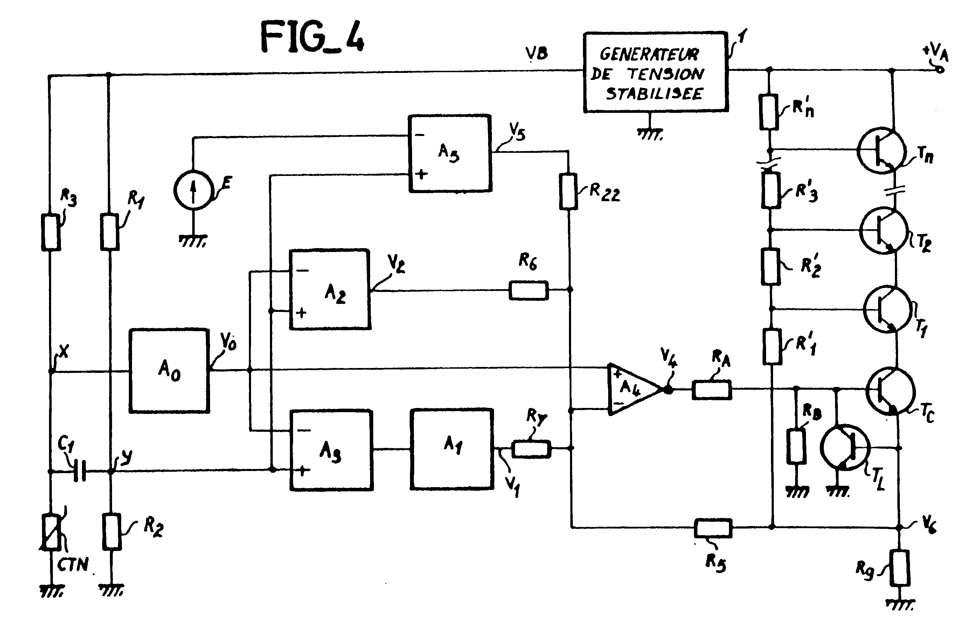

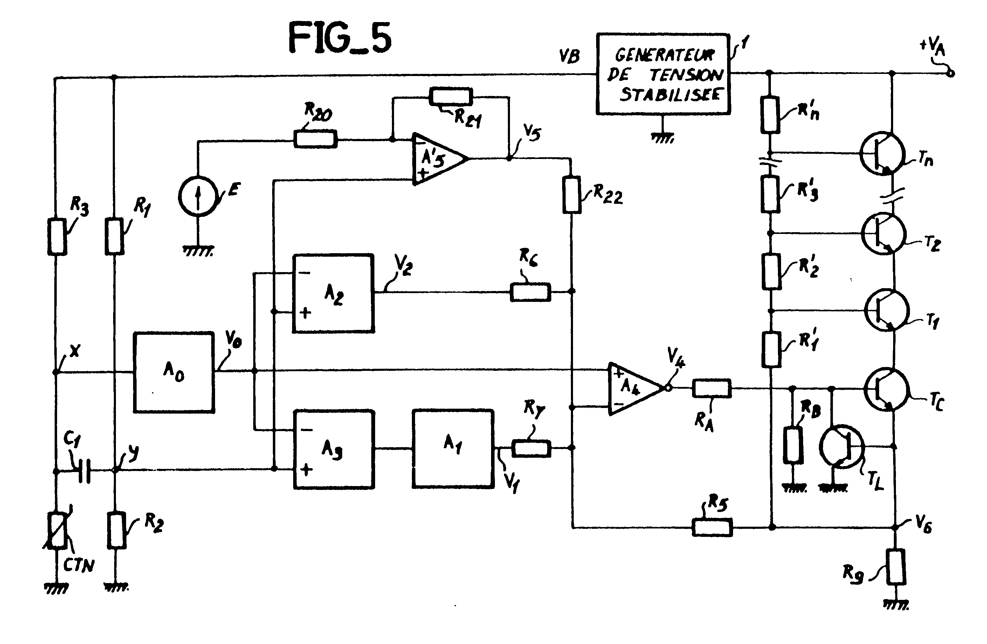

la figure 2 est un schéma d'un autre mode de réalisation de la présente invention,

la figure 3 est un schéma électrique d'un troisième mode de réalisation de la présente invention,

la figure 4 est un schéma d'un perfectionnement apporté au dispositif de la figure 3, et

a la figure 5 est un schéma d'un autre mode de réalisation du perfectionnement de la figure 4.

Pour simplifier la description, sur les figures les mêmes références désignent les mêmes éléments.

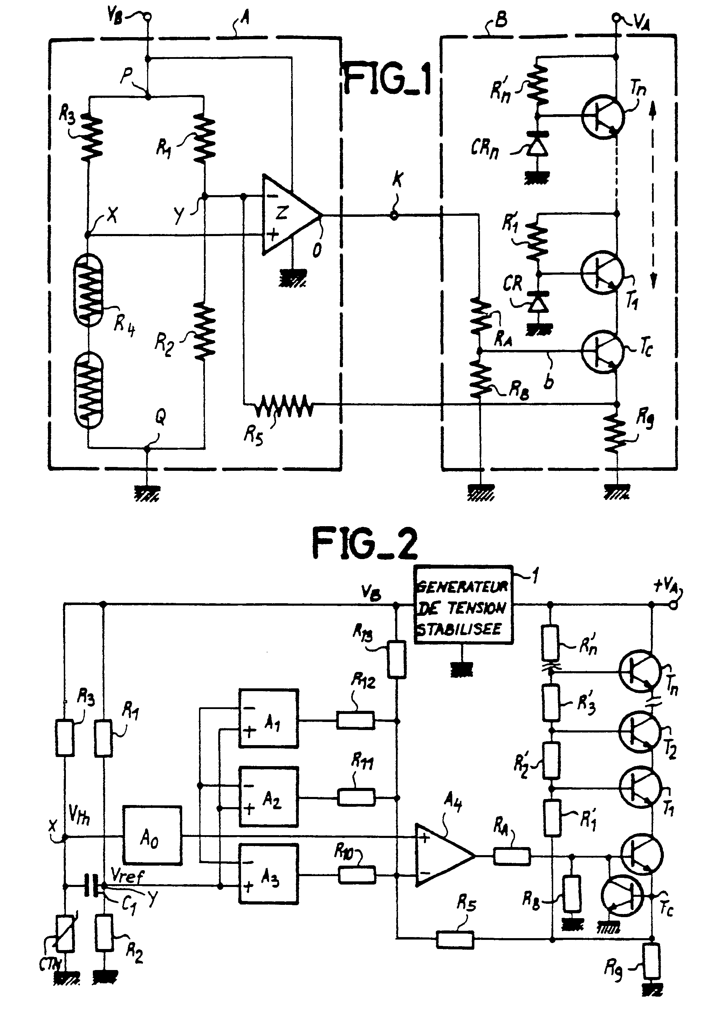

Le perfectionnement de la présente invention sera tout d'abord décrit avec référence à la figure 1 dans le cas d'un dispositif de régulation thermique d'une enceinte du type de ceux décrits dans le brevet européen n° 4 233 au nom de la demanderesse.

Comme représenté sur la figure 1, ce dispositif comporte essentiellement un circuit de mesure de température référence A et un circuit de chauffage référence B.

Le circuit de mesure A comporte un ou plusieurs éléments thermosensibles ou capteurs de température $R_4$ connectés en série. Ces capteurs sont inclus dans une branche d'un pont de résistances dont les trois autres branches comportent des résistances $R_1$, $R_2$, $R_3$. Une des diagonales du pont est alimentée en tension continue et reçoit à cet effet une tension VB au point P, le point Q opposé de la diagonale étant à la masse. Lest extrémités XY de l'autre diagonale du pont sont reliées aux deux entrées d'un amplificateur opérationnel Z muni d'une boucle de contre-réaction en courant continu comprenant une résistance $R_5$ dont le montage sera explicité ci-après.

Le circuit de chauffage B comporte une chaîne de transistors connectés en série par leur émetteur et leur connecteur et références $T_1$ à $T_n$. Ces transistors sont montés en régulateurs de tension. La base des transistors $T_1$ à $T_n$ est maintenue à un potentiel constant par un pont résistance-diode Zener tel que $R'_n$ et $CR_n$ pour le transistor $T_n$.

Le transistor TC monté en série avec le transistor $T_1$ assure la fonction de transistor de commande. La base du transistor TC est reliée à la sortie de l'amplificateur opérationnel Z à travers un pont diviseur RA—RB dont le rôle est d'assurer une liaison tenant compte des conditions particulières de polarisation de l'amplificateur Z. Ce pont diviseur de rapport convenable permet de diminuer la tension résiduelle de sortie de l'amplificateur à son niveau bas pour l'amener à une valeur inférieure à la tension de blocage de la base du transistor TC. Le montage du transistor TC en émetteur-suiveur fait que sa tension de base se retrouve au niveau de son émetteur et comme celui-ci est connecté à la masse par l'intermédiaire d'une résistance d'émetteur $R_9$, le courant I de la chaîne des transistors TC, $T_1$ à $T_n$, est déterminé par les variations de la tension de base du transistor TC, qui peut participer au même titre que les autres transistors au chauffage de l'enceinte.

Conformément à la présente invention, la résistance $R_5$ de la boucle de contre-réaction de l'amplificateur de sortie Z est connectée entre d'une part le point commun entre l'émetteur du transistor de commande TC et sa résistance d'émetteur $R_9$ et d'autre part l'entrée inverseuse de l'amplificateur opérationnel Z. Avec ce montage, la tension aux bornes de la résistance d'émetteur $R_9$ est proportionnelle à la tension sur l'entrée inverseuse de l'amplificateur Z. D'autre part, on ne dépend plus du tout des paramètres électriques du transistor TC et le gain en courant est lié aux valeurs des résistances $R_1$, $R_2$, $R_5$ et $R_9$, ce qui permet une bonne reproductibilité du système.

Par ailleurs, le fonctionnement du circuit ci-dessus est identique au fonctionnement décrit dans le brevet européen n° 4 233 auquel on se référera. De plus, il est évident pour l'homme de l'art que toutes les modifications apportées au circuit de chauffage et décrites dans le brevet européen n° 4 233 peuvent être incorporées à la présente invention notamment en ce qui concerne le circuit de limitation de courant constitué par un transistor amplificateur attaqué sur sa base un signal lié au courant à limiter et agissant par son collecteur sur la base du transistor TC de commande.

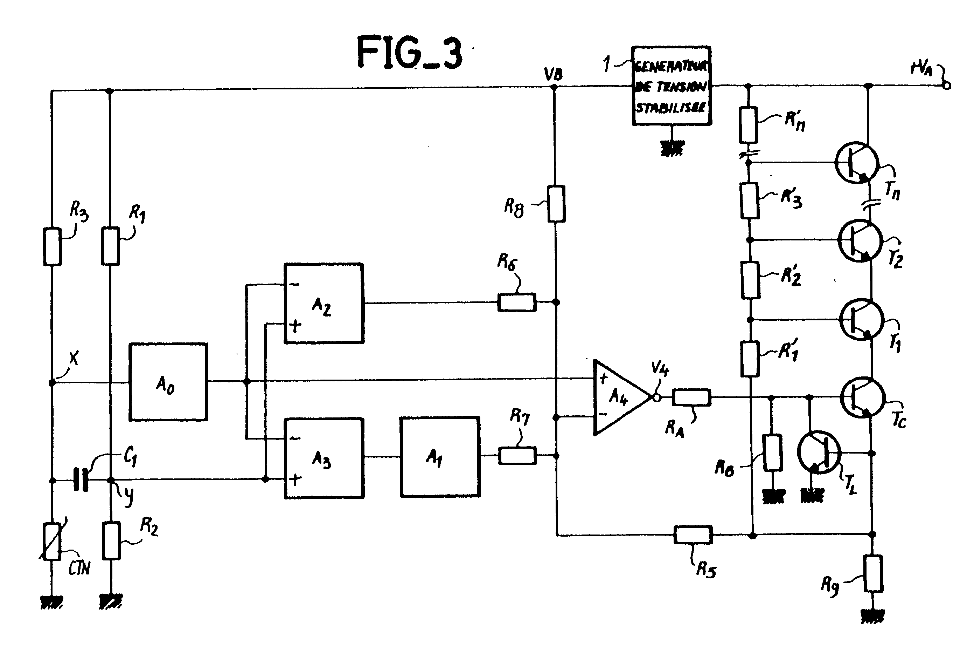

On décrira maintenant avec référence aux figures 2 et 3, deux autres modes de réalisation de la présente invention. Dans ces deux modes de réalisation, le circuit de mesure de température a été modifié pour incorporer un dispositif de régulation à action proportionnelle intégrale et dérivée tel que décrit dans la demande de brevet français n° 82.19584 au nom de la demanderesse.

Comme représenté sur la figure 2, une tension d'alimentation positive VA alimente un générateur de tension stabilisée 1 dont la tension de sortie VB est destinée à l'alimentation d'un pont de résistances et de cinq amplificateurs opérationnels $A_0$ à $A_4$. Le pont de résistance comporte une résistance $R_3$ dont une première extrémité est mise à la tension VB et dont la seconde extrémité, à laquelle est présente une tension de mesure VTH, est reliée à au moins une thermistance à coefficient de température négatif CTN dont l'éxtrémité opposée est mise à la masse. La tension de mesure VTH est ainsi une fonction décroissante de la température. D'autre part, la tension VB alimente également une deuxième branche du pont constituée par la résistance $R_1$ montée entre la tension VB et un point milieu présentant une tension de référence Vréf., ce point milieu étant connecté à une résistance $R_2$ dont l'autre borne est mise à la masse. Une capacité de découplage $C_1$ est prévue entre les points X et Y des deux branches du pont de résistances. D'autre part, la tension VTH est envoyée sur un amplificateur opérationnel $A_0$ monté en suiveur de tension. La sortie de l'amplificateur $A_0$ est envoyée sur les entrées inverseuses de trois amplificateurs opérationnels $A_1$, $A_2$, $A_3$ montés en parallèle dont les entrées non inverseuses directes reçoivant la tension de référence Vréf.. Les trois amplificateurs opérationnels $A_1$, $A_2$, $A_3$ sont destinés respectivement aux corrections proportionnelle, intégrale et dérivée et sont réalisés comme décrit dans la demande de brevet français n° 82.19584. En conséquence, l'amplificateur $A_1$ est un amplificateur à action proportionnelle, l'amplificateur $A_2$ est un amplificateur à action intégrale et l'amplificateur $A_3$ est un amplificateur a action dérivée. Les sorties des amplificateurs $A_1$, $A_2$, $A_3$ sont connectées respectivement par l'intermédiaire de trois résistances $R_{10}$, $R_{11}$, $R_{12}$ sur la borne inverseuse d'un amplificateur opérationnel $A_4$ de sortie dont l'entrée non inverseuse directe reçoit la sortie de l'amplificateur $A_0$. Conformément à la présente invention, l'amplificateur $A_4$ est muni d'une boucle de contre-réaction constituée par une résistance $R_5$ qui est montée entre d'une part le point commun entre l'emetteur du transistor de commande TC et sa résistance d'émetteur $R_9$ et d'autre part l'entrée inverseuse de l'amplificateur $A_4$.

Pour compenser la chute de tension aux bornes de la résistance $R_5$, la sortie de générateur 1 est connectée par l'intermédiaire de la résistance $R_{13}$ sur l'entrée inverseuse de l'amplificateur $A_4$.

Le fonctionnement de ce circuit est identique au fonctionnement du dispositif de régulation décrit dans la demande de brevet française n° 82.19584. Toutefois, par suite du montage de la boucle de contre-réaction, la tension aux bornes de la résistance $R_9$ est proportionnelle à la somme des signaux délivrés par $A_1$, $A_2$, $A_3$ et VB et le gain en courant est uniquement lié aux valeurs des résistances $R_{10}$, $R_{11}$, $R_{12}$, $R_{13}$, $R_5$ et $R_9$, ce qui permet d'obtenir une bonne reproductibilité du circuit puisqu'on ne dépend plus des paramètres électriques du transistor de commande TC.

Comme représenté sur les figures 2 et 3, le circuit de chauffage a, lui aussi, été modifié par rapport au circuit de chauffage décrit dans le brevet européen n° 4 233 ou dans la demande de brevet français n° 82.19584. Dans ce cas en effet, les bases des transistors de chauffage $T_1$, $T_2$, $T_n$ sont connectées à un pont diviseur commun constitué des résistances $R'_1$, $R'_2$, $R'_3$, $R'_n$, montées entre le point commun à $R_5$ e $R_9$ et la tension d'alimentation $V_4$.

L'avantage de ce montage est de diminuer le nombre de composants à câbler et de réduire la consommation puisque le pont ne comporte que des résistances en ce série. D'autre part, la polarisation des différents transistors est référencée par rapport à la tension aux bornes de la résistance d'émetteur $R_9$, ce qui a pour but de compenser la tension collecteur-émetteur de chaque transistor en fonction du courant de chauffage.

D'autre part, le transistor de commande $T_C$ est monté en série avec le transistor $T_1$. La base du transistor $T_C$ est reliée à la sortie de l'amplificateur de sortie $A_4$ à travers un pont diviseur $R_A$—$R_B$ dont le rôle est d'assurer un liaison tenant compte des conditions particulières de polarisation de l'amplificateur $A_4$. D'autre part, un transistor $T_L$ est monté entre la base et l'emetteur du transistor de commande $T_C$ de telle sorte que la base du transistor $T_L$ soit connectée a l'emetteur du transistor $T_C$, l'emetteur du transistor $T_L$ soit connecté à la masse et le collecteur du transistor $T_L$ soit connecté à la base du transitor $T_C$.

Par ailleurs, comme mentionné dans la demande de brevet français n° 83.16549 au nom de la demanderesse, les transistors TC, $T_1$, $T_2$, $T_n$ seront de préférence des transistors du type Darlington de manière à diminuer le courant dans le pont de résistance $R'_1$ à $R'_n$.

Sur la figure 3, on a représenté une variante de réalisation du dispositif de régulation de la figure 2. Dans ce cas, l'amplificateur opérationnel $A_1$ à action dérivée a été remplacé par un amplificateur $A'_1$ "suiveur-dérivateur" dont la tension de sortie est égale à la somme de sa tension d'entrée et de sa dérivée. L'amplificateur $A'_1$ est positionné en sortie de l'amplificateur à action proportionnelle $A_3$. Ceci permet d'utiliser, pour l'amplificateur "suiveur-dérivateur," une capacité chimique polarisée, ce qui permet de réduire de manière appréciable l'encombrement et le coût du circuit. Les autres parties du circuit de la figure 3 sont identiques au circuit de la figure 2, notamment en ce qui concerne les perfectionnements apportés par la présente invention.

Selon une autre caractéristique de la présente invention représentée sur la figure 4, l'entrée inverseuse de l'amplificateur opérationnel de sortie $A_4$ est reliée par l'intermédiaire d'une résistance fixe $R_{22}$ en sortie d'un amplificateur différentiel $A_5$ dont l'entrée directe non-inverseuse reçoit la tension référence Vréf. et dont l'entrée inverseuse reçoit une tension de polarisation E.

Cette caractéristique peut s'appliquer aussi bien au mode de réalisation de la figure 2 qu'à celui de la figure 3.

On expliquera maintenant le fonctionnement de ce perfectionnement, le reste du dispositif fonctionnant de la manière décrite ci-dessus. Ainsi, en régulation, la tension différentielle du pont de mesure composé des résistances $R_1$, $R_2$, $R_3$ et de la thermistance CTN est nulle. En conséquence, la tension $V_0$ en sortie de l'amplificateur opérationnel suiveur $A_0$ est égale à la tension au point Y à savoir la tension de référence Vréf. . Il en résulte que la tension $V_1$ en sortie de l'amplificateur opérationnel $A_1$ est égale à la tension $V_0$, car la tension différentielle à l'entrée de l'amplificateur $A_3$ est nulle. L'amplificateur de sortie $A_4$ fonctionnant en régime linéaire, la tension sur son entrée non-inverseuse est égale à la tension sur son entrée inverseuse.

D'autre part, la fonction de transfert de l'amplificateur différentiel $A_5$ est donnée par l'équation suivante:

$$V_5 = G.V_0 - J.E$$

dans laquelle G et J sont des constantes.

Avec tous les paramètres ci-dessus, on peut calculer la tension $V_2$ en sortie de l'amplificateur opérationnel $A_2$ en fonction des tensions $V_0$, $V_1$, $V_6$ et E en appliquant le théorème de Milmann sur l'entrée inverseuse de l'amplificateur opérationnel de sortie $A_4$. On obtient alors l'équation suivante:

$$V_2 = V_0 \left(1 + \frac{R_6}{R_5} + \frac{R_6}{R_{22}}(1-G)\right) + JE\,\frac{R_6}{R_{22}} - \frac{V_6 R_6}{R_5}$$

Conformément à la présente invention, pour ne pas saturer l'amplificateur à action intégrale $A_2$, la valeur de la constante G sera choisie de telle sorte que la tension $V_2$ en sortie de l'amplificateur $A_2$ ne dépende pas de la tension $V_0$. Pour cela il faut que le terme entre parenthèses soit nul et l'on obtient:

$$G = 1 + \frac{R_{22}}{R_6} + \frac{R_{22}}{R_5}$$

Dans ce cas:

$$V_2 = JE\,\frac{R_6}{R_{22}} - \frac{V_6 R_6}{R_5}$$

Ainsi la tension en sortie de l'amplificateur à action intégrale $A_2$ ne dépend plus que de deux termes: $V_6$ qui est fonction du courant de chauffage,

E qui est une tension que l'on choisira en fonction de J pour régler le point de fonctionnement de l'amplificateur à action intégrale $A_2$.

Selon un autre mode de réalisation représenté sur la figure 5, l'amplificateur différentiel $A_5$ est remplacé par un amplificateur opérationnel $A'_5$ associé à deux résistances $R_{21}$ et $R_{20}$. De manière plus spécifique, la résistance $R_{20}$ est connectée entre la polarisation E et l'entrée inverseuse de l'amplificateur $A'_5$ tandis que la résistance $R_{21}$ est connectée entre la sortie l'entrée inverseuse de l'amplificateur $A'_5$.

Dans ce cas la fonction de transfert de l'amplificateur $A'_5$ est donnée par l'équation suivante:

$$V_5 = V_0 \left(1 + \frac{R_{21}}{R_{20}}\right) - E\,\frac{R_{21}}{R_{20}}$$

En comparant cette équation à l'équation $V_5 : G.V_0 - J.E$, on obtient:

$$G = 1 + \frac{R_{21}}{R_{20}} \quad \text{et} \quad J = \frac{R_{21}}{R_{20}}$$

d'où la relation donnant la tension $V_2$ en sortie de l'amplificateur $A_2$ en fonction de $V_0$, $V_6$ et E.

$$V_2 = V_0 \left(1 + \frac{R_6}{R_5} - \frac{R_6 R_{21}}{R_{22} R_{20}}\right) - V_6\,\frac{R_6}{R_5} + E\,\frac{R_6 R_{21}}{R_{22} R_{20}}$$

Si l'on souhaite que la tension $V_2$ ne dépende pas de la tension $V_0$, on obtient alors:

$$1 + \frac{R_6}{R_5} = \frac{R_6 R_{21}}{R_{22} R_{20}}$$

5

Ainsi, la tension $V_2$ ne dépend plus que de $V_6$ et de E. Dans ce cas, cest la source de tension E qui fixera le point de fonctionnement de l'amplificateur à action intégrale $A_2$.

**Revendications**

1. Perfectionnement au dispositif de régulation thermique d'une enceinte comprenant:

un circuit de mesure de température (A) comportant un pont de résistances à quatre branches ( $R_1$, $R_2$, $R_3$, $R_4$, CTN) au moins une branche contenant un élément thermosensible ($R_4$, CTN), un amplificateur (Z, $A_4$) de sortie comportant une entrée inverseuse reliée à une première sortie du pont de résistances, située au point commun entre deux branches du pont, et une entrée non inverseuse reliée à une seconde sortie du pont de résistances située au point commun entre les deux autres branches et une sortie délivrant un signal de contrôle représentatif de l'écart entre la température mesurée de l'enceinte et une température de référence,

un circuit de chauffage (B) de l'enceinte alimenté par une source de tension et comportant au moins un transistor de commande (TC) dont la base est reliée à la sortie de l'amplificateur de sortie, et dont l'émetteur délivre un courant de chauffage réglable dans une résistance d'émetteur ($R_9$),

le dispositif de régulation thermique est caractérisé en ce qu'il comporte de plus une boucle de contre-réaction (R5) en courant continu intercalée entre d'une part le point commun entre l'émetteur du transistor de commande (TC) et sa résistance d'émetteur ($R_9$) et d'autre part l'entrée inverseuse de l'amplificateur de sortie.

2. Perfectionnement selon la revendication 1, caractérisé en ce que le circuit de chauffage comporte de plus au moins un circuit semiconducteur stabilisateur de tension ($T_1$, $T_2$, $T_n$), traversé par un courant de chauffage réglable par le transistor de commande (TC).

3. Perfectionnement selon la revendication 1, caractérisé en ce que le circuit de mesure de température comprend de plus un circuit de régulation à action proportionelle intégrale et dérivée inséré entre la première sortie et la deuxième sortie du pont de résistances et au moins l'entrée inverseuse de l'amplificateur de sortie.

4. Perfectionnement selon la revendication 3, caractérisé en ce que le circuit de régulation à action proportionnelle, intégrale et dérivée comporte trois amplificateurs opérationnels ($A_1$, $A_2$, $A_3$) montés en parallèle et alimentés sous une seule tension de polarité donnée:

l'entrée inverseuse de chacun des amplificateurs opérationnels étant connectée à la seconde sortie du pont de résistances, cette seconde sortie fournissant une tension de mesure suivant une fonction décroissante de la température mesurée de l'enceinte,

l'entrée non-inverseuse directe de chacun des amplificateurs opérationnels étant connectée à la première sortie du pont de résistances, cette première sortie fournissant une tension de référence délivrée par un générateur (1),

la sortie de chacun des amplificateurs opérationnels et éventuellement la sortie du générateur (1) étant connectées à l'entrée inverseuse de l'amplificateur de sortie ($A_4$),

le premier amplificateur ($A_1$) étant un amplificateur à action proportionnelle,

le second amplificateur ($A_2$) étant un amplificateur à action intégrale,

le troisième amplificateur ($A_3$) étant un amplificateur à action dérivée.

5. Perfectionnement selon la revendication 4, caractérisé en ce que le circuit de régulation à action intégrale, proportionnelle et dérivée comporte en outre un quatrième amplificateur opérationnel ($A_0$) monté en suiveur et recevant la tension de mesure sur son entrée, non-inverseuse directe et dont la sortie permet de fournir la tension de mesure à au moins l'un des trois amplificateur opérationnels ($A_1$, $A_2$, $A_3$) ou à l'amplificateur de sortie ($A_4$).

6. Perfectionnement selon la revendication 4, caractérisé en ce que des moyens ($A_5$, $A'_5$, $R_{22}$, $R_{20}$, $R_{21}$, E) sont prévus dans le circuit de mesure de témperature pour fixer automatiquement son point de fonctionnement quelle que soit la tension de référence.

7. Perfectionnement selon la revendication 6, caractérisé en ce que les moyens, pour fixer automatiquement le point de fonctionnement du circuit de mesure de température quelle que soit la tension de référence, sont constitués par une résistance fixe ($R_{22}$) connectée sur l'entrée inverseuse de l'amplificateur de sortie ($A_4$) et polarisée par une source de tension ($A'_5$, $R_{20}$, $R_{21}$, $A_5$, E) directement fonction de la tension de référence.

8. Perfectionnement selon la revendication 7, caractérisé en ce que la résistance fixe ($R_{22}$) est reliée à la sortie d'un amplificateur différentiel ($A_5$) recevant sur son entrée non-inverseuse la tension de référence et sur non entrée inverseuse une tension de polarisation (E).

9. Perfectionnement selon la revendication 8, caractérisé en ce que la constante G de la fonction de transfert de l'amplificateur différentiel est choisie telle que:

$$G = 1 + \frac{R_{22}}{R_5} + \frac{R_{22}}{R_6}$$

$R_5$ étant la résistance de la boucle de contre-réaction de l'amplificateur de sortie ($A_4$), et

EP 0 256 071 B1

$R_6$ étant la résistance connectée en sortie de l'amplificateur à action intégrale ($A_2$).

10. Perfectionnement selon la revendication 7, caractérisé en ce que la résistance fixe ($R_{22}$) est reliée à la sortie d'un amplificateur opérationnel ($A'_5$) à action proportionnelle recevant sur son entrée non-inverseuse la tension de référence et sur son entrée inverseuse, par l'intermédiaire d'une résistance ($R_{20}$) une tension de polarisation (E), une résistance ($R_{21}$) étant montée entre la sortie et l'entrée inverseuse de l'amplificateur opérationnel ($A'_5$).

11. Perfectionnement selon la revendication 10, caractérisé en ce que les résistances sont choisies de telle sorte que:

$$1 + \frac{R_6}{R_5} = \frac{R_6 R_{21}}{R_{22} R_{20}}$$

$R_5$ étant la résistance de la boucle de contre-réaction de l'amplificateur de sortie ($A_4$), et

$R_6$ étant la résistance connectée en sortie de l'amplificateur à action intégrale ($A_2$).

12. Perfectionnement selon la revendication 3, caractérisé en ce que le circuit de régulation à action proportionnelle intégrale et dérivée comporte trois amplificateurs opérationnels ($A'_1$, $A_2$, $A_3$) consistant en un amplificateur à action intégrale ($A_2$), un amplificateur monté en suiveur-dérivateur ($A'_1$), un amplificateur à action proportionnelle ($A_3$):

l'entrée non-inverseuse directe de l'amplificateur à action intégrale ($A_2$) et de l'amplificateur à action proportionnelle ($A_3$) étant chacune connectées à la première sortie du pont de résistances, cette première sortie fournissant une tension de référence délivrée par un générateur,

l'entrée inverseuse de l'amplificateur à action intégrale ($A_2$) et de l'amplificateur à action proportionnelle ($A_3$) étant chacune connectées à la seconde sortie du pont de résistances, cette seconde sortie fournissant une tension de mesure suivant un fonction décroissante de la température mesurée de l'enceinte,

l'amplificateur monté en suiveur-dérivateur ($A'_1$) étant connecté à la sortie de l'amplificateur à action proportionnelle ($A_3$).

la sortie de l'amplificateur à action intégrale ($A_2$), la sortie de l'amplificateur monté en suiveur-dérivateur ($A'_1$) et éventuellement la sortie du générateur (1) étant connectées à l'entrée inverseuse de l'amplificateur de sortie ($A_4$).

13. Perfectionnement selon la revendication 12, caractérisé en ce que le circuit de régulation à action intégrale, proportionnelle et dérivée comporte en outre un quatrième amplificateur opérationnel ($A_0$) monté en suiveur et recevant la tension de mesure sur son entrée non-inverseuse directe et dont la sortie permet de fournir la tension de mesure à au moins l'un des amplificateurs opérationnels ($A'_1$, $A_2$, $A_3$,) ou à l'amplificateur de sortie ($A_4$).

14. Perfectionnement selon la revendication 12, caractérisé en ce que des moyens ($A_5$, $A'_5$, $R_{22}$, $R_{20}$, $R_{21}$, E) sont prévus dans le circuit de mesure de température pour fixer automatiquement son point de fonctionnement quelle que soit la tension de référence.

15. Perfectionnement selon la revendication 14, caractérisé en ce que les moyens pour fixer automatiquement le point de fonctionnement du circuit de mesure de température quelle que soit la tension de référence sont constitués par une résistance fixe ($R_{22}$) connectée sur l'entrée inverseuse de l'amplificateur de sortie ($A_4$) et polarisée par une source de tension ($A'_5$, $R_{20}$, $R_{21}$, $A_5$, E) directement fonction de la tension de référence.

16. Perfectionnement selon la revendication 15, caractérisé en ce que la résistance fixe ($R_{22}$) est reliée à la sortie d'un amplificateur différentiel ($A_5$) recevant sur son entrée non-inverseuse la tension de référence et sur son entrée inverseuse une tension de polarisation (E).

17. Perfectionnement selon la revendication 16, caractérisé en ce que la constante G de la fonction de transfert de l'amplificateur différentiel est choisie telle que:

$$G = 1 + \frac{R_{22}}{R_5} + \frac{R_{22}}{R_6}$$

$R_5$ étant la résistance de la boucle de contre-réaction de l'amplificateur de sortie ($A_4$), et

$R_6$ étant la résistance connectée en sortie de l'amplificateur à action intégrale ($A_2$).

18. Perfectionnement selon la revendication 15, caractérisé en ce que la résistance fixe ($R_{22}$) est reliée à la sortie d'un amplificateur opérationnel ($A'_5$) à action proportionnelle recevant sur son entrée non-inverseuse la tension de référence et sur son entrée inverseuse, par l'intermédiaire d'une résistance ($R_{20}$) une tension de polarisation (E), une résistance ($R_{21}$) étant montée entre la sortie et l'entrée inverseuse de l'amplificateur opérationnel ($A'_5$).

7

19. Perfectionnement selon la revendication 18, caractérisé en ce que les résistances sont choisies de telle sorte que:

$$1 + \frac{R_6}{R_5} = \frac{R_6 R_{21}}{R_{22} R_{20}}$$

$R_5$ étant la résistance de la boucle de contre-réaction de l'amplificateur de sortie $(A_4)$ et
$R_6$ étant la résistance connectée en sortie de l'amplificateur à action intégrale $(A_2)$.

20. Perfectionnement selon la revendication 2, caractérisé en ce que les circuits semiconducteurs stabilisateurs de tension $(T_1$ à $T_n)$ reliés en série sont soumis à une fraction de la tension d'alimentation obtenue par un pont de résistances $(R'_1$ à $R'_n)$ communs à tous ces circuits semiconducteurs, monté entre la tension d'alimentation et l'émetteur du transistor de commande (TC).

**Patentansprüche**

1. Verbesserung der Temperatur-Regeleinrichtung eines Raums, die folgende Komponenten aufweist:
ein Temperaturmeßschaltung (A), mit einer Widerstandsbrücke aus vier Zweigen $(R_1, R_2, R_3, R_4, CTN)$, wobei mindestens ein Zweig ein wärmeempfindliches Element $(R_4, CTN)$ enthält, mit einem Ausgangsverstärker $(Z, A_4)$, dessen invertierender Eingang mit einem ersten Ausgang der Widerstandbrücke verbunden ist, der am Verbindungspunkt zweier Brückenzweige liegt, dessen nichtinvertierender Eingang mit einem zweiten Ausgang der Widerstandsbrücke verbunden ist, der am Verbindungspunkt der beiden übrigen Brückenzweige liegt, und dessen Ausgang ein Steuersignal liefert, das für die Differenz zwischen der gemessenen Temperatur und einer Bezugstemperatur repräsentativ ist,
eine Heizschaltung (B) für den Raum, vie von einer Spannungsquelle gespeist wird und mindestens einen Steuertransistor (TC) aufweist, dessen Basis an den Ausgang des Ausgangsverstärkers angeschlossen ist und dessen Emitter einen regelbaren Herzstrom an einen Emitterwiderstand $(R_9)$ liefert, dadurch gekennzeichnet, daß die Einrichtung weiter eine negative Gleichstrom-Rückkoppelungsschleife (R5) aufweist, die einerseits an den Verbindungspunkt zwischen dem Emitter des Steuertransistors (TC) und seinem Emitterwiderstand $(R_9)$, und andererseits an den invertierenden Eingang des Ausgangsverstärkers angeschlossen ist.

2. Verbesserung nach Anspruch 1, dadurch gekennzeichnet, daß die Heizschaltung weiter mindestens eine Halbleiter-Spannungsstabilisierschaltung $(T_1, T_2, T_n)$ aufweist, die von einem durch den Steuertransistor regelbaren Heizstrom durchflossen wird.

3. Verbesserung nach Anspruch 1, dadurch gekennzeichnet, daß die Temperaturmeßschaltung weiter eine PID-Regelschaltung aufweist, die zwischen den ersten und den zweiten Ausgang der Widerstandsbrücke und mindestens den invertierenden Eingang des Ausgangsverstärkers eingefügt ist.

4. Verbesserung nach Anspruch 3, dadurch gekennzeichnet, daß die PID-Regelschaltung drei Operationsverstärker $(A_1, A_2, A_3)$ aufweist, die parallelgeschaltet und mit einer gleichen Spannung gegebener Polarität gespeist werden, wobei
der invertierende Eingang jedes der Operationsverstärker mit dem zweiten Ausgang der Widerstandsbrücke verbunden ist und dieser zweite Ausgang eine Meßspannung entsprechend einer abnehmenden Funktion der der in dem Raum gemessenen Temperatur liefert,
der nichtinvertierende direkte Eingang jedes der Operationsverstärker mit der ersten Ausgang der Widerstandsbrücke vebunden ist und dieser Ausgang eine von einem Generator (1) gelieferte Bezugsspannung liefert,
der Ausgang jedes Operationsverstärkers und gegebenenfalls der Ausgang des Generators (1) mit dem invertierenden Eingang des Ausgangsverstärkers $(A_4)$ verbunden ist,
der erste Verstärker $(A_1)$ ein Proportionalverstärker ist,
der zweite Verstärker $(A_2)$ ein Integrierverstärker ist, und
der dritte Verstärker $(A_3)$ ein Differenzierverstärker ist.

5. Verbesserung nach Anspruch 4, dadurch gekennzeichnet, daß die PID-Regelschaltung weiter einen vierten Operationsverstärker $(A_0)$ aufweist, der als Folgeregler geschaltet ist und dessen nichtinvertierender direkter Eingang die Meßspannung empfängt, dessen Ausgangdas Anlegen der Meßspannung an mindestens einen der drei Operationsverstärker $(A_1, A_2, A_3)$ oder an den Ausgangsverstärker $(A_4)$ ermöglicht.

6. Verbesserung nach Anspruch 4, dadurch gekennzeichnet, daß in der Temperaturmeßschaltung Mittel $(A_5, A'_5, R_{22}, R_{20}, R_{21}, E)$ vorgesehen sind, um automatisch ihren Arbeitspunkt unabhängig von der Bezugspannung einzustellen.

7. Verbesserung nach Anspruch 6, dadurch gekennzeichnet, daß die zur automatischen Einstellung des Arbeitspunktes der Temperaturmeßschaltung unabhängig von der Bezugsspannung dienenden Mittel aus einem Festwiderstand $(R_{22})$ bestehen, der an den invertierenden Eingang des Ausgangsverstärkers $(A_4)$ angeschlossen und von einer Spannungsquelle $(A'_5, R_{20}, R_{21}, A_5, E)$ in direkter Abhängigkeit von der Bezugsspannung vorgespannt wird.

8. Verbesserung nach Anspruch 7, dadurch gekennzeichnet, daß der Festwiderstand $(R_{22})$ mit dem

Ausgang eines Differentialverstärkers (A₅) verbunden ist, der an seinem nichtinvertierenden Eingang die Bezugsspannung und an seinem invertierenden Eingang eine Vorspannung (E) empfängt.

9. Verbesserung nach Anspruch 8, dadurch gekennzeichnet, daß die Konstante G der Transferfunktion des Differentialverstärkers so gewählt wird, daß gilt:

$$G = 1 + R_{22}/R_5 + R_{22}/R_6$$

wobei:

$R_5$ der Widerstand der negativen Rückkopplungsschleife des Ausgangsverstärkers (A₄), und
$R_6$ der an den Ausgang des Integrierverstärkers (A₂) angeschlossene Widerstand ist.

10. Verbesserung nach Anspruch 7, dadurch gekennzeichnet, daß der Festwiderstand ($R_{22}$) mit dem Ausgang eines Proportional-Operationsverstärkers (A′₅) verbunden ist, der an seinem nichtinvertierenden Eingang die Bezugsspannung und an seinem invertierenden Eingang über einen Widerstand ($R_{20}$) eine Vorspannung (E) empfängt, wobei ein Widerstand ($R_{21}$) zwischen den Ausgang und den invertierenden Eingang des Operationsverstärkers (A′₅) eingefügt ist.

11. Verbesserung nach Anspruch 10 dadurch gekennzeichnet, daß die Widerstände so gewählt sind, das gilt:

$$1 + R_6/R_5 = R_6 \cdot R_{21}/(R_{22} \cdot R_{20})$$

wobei

$R_5$ der Widerstand der negativen Rückkopplungsschleife des Ausgangsverstärkers (A₄), und
$R_6$ der an den Ausgang des Integralverstärkers (A₂) angeschlossene Widerstand ist.

12. Verbesserung nach Anspruch 3, dadurch gekennzeichnet, daß die PID-Regelschaltung drei Operationsverstärker (A′₁, A₂, A₃) aufweist, die aus einem Integrierverstärker (A₁), einem als Nachfolger-Differenzierer (A′₁) geschalteter Verstärker und einem Proportionalverstärker (A₃) bestehen, wobei:

der nichtinvertierende direkte Eingang des Integrierverstärkers (A₂) und der des Proportionalverstärkers (A₃) je an den ersten Ausgang der Widerstandsbrücke angeschlossen ist und dieser erste Ausgang eine von einem Generator gelieferte Bezugspannung liefert,

der invertierende Eingang des Integrierverstärkers (A₂) und des Proportionalverstärkers (A₃) je an den zweiten Ausgang der Widerstandsbrücke angeschlossen ist, wobei dieser Ausgang eine Meßspannung entsprechend einer abnehemenden Funktion der gemessenen Temperatur des Raums liefert,

der als Nachfolger-Differenzierer (A′₁) geschaltete Verstärker an den Ausgang des Proportionalverstärkers (A₃) angeschlossen ist, und

der Ausgang des Integrierverstärkers (A₂), der Ausgang des als Nachfolger-Differenzierer geschalteten Verstärkers (A′₁) und gegebenenfalls der Ausgang des Generators (1) an den invertierenden Eingang des Ausgangsverstärkers (A₄) angeschlossen sind.

13. Verbesserung nach Anspruch 12, dadurch gekennzeichnet, daß die PID-Regelschaltung weiter einen vierten Operationsverstärker (A₀) aufweist, der als Folgeregler geschaltet ist, dessen nichtinvertierender direkter Eingang die Meßspannung empfängt und dessen Ausgang das Anlegen der Meßspannung an mindestens einen der drei Operationsverstärker (A₁, A₂, A₃) oder an den Ausgangsverstärker (A₄) ermöglicht.

14. Verbesserung nach Anspruch 12, dadurch gekennzeichnet, daß in der Temperaturmeßschaltung Mittel (A₅, A′₅, $R_{22}$, $R_{20}$, $R_{21}$, E) vorgesehen sind, um automatisch ihren Arbeitspunkt unabhängig von der Bezugspannung einzustellen.

15. Verbesserung nach Anspruch 14, dadurch gekennzeichnet, daß die zur automatischen Einstellung des Arbeitspunktes der Temperaturmeßschaltung unabhängig von der Bezugsspannung dienenden Mittel aus einem Festwiderstand ($R_{22}$) bestehen, der an den invertierenden Eingang des Ausgangsverstärkers (A₄) angeschlossen und von einer Spannungsquelle (A′₅, $R_{20}$, $R_{21}$, A₅, E) in direkter Abhängigkeit von der Bezugsspannung vorgespannt wird.

16. Verbesserung nach Anspruch 15, dadurch gekennzeichnet, daß der Festwiderstand ($R_{22}$) mit dem Ausgang eines Differentialverstärkers (A₅) verbunden ist, der an seinem nichtinvertierenden Eingang die Bezugsspannung und an seinem invertierenden Eingang eine Vorspannung (E) empfängt.

17. Verbesserung nach Anspruch 16, dadurch gekennzeichnet, daß die Konstante G der Transferfunktion des Differentialverstärkers so gewählt wird, daß gilt:

$$G = 1 + R_{22}/R_5 + R_{22}/R_6$$

wobei:

$R_5$ der Widerstand der negativen Rückkopplungsschleife des Ausgangsverstärkers (A₄), und
$R_6$ der an den Ausgang des Integrierverstärkers (A₂) angeschlossene Widerstand ist.

18. Verbesserung nach Anspruch 15, dadurch gekennzeichnet, daß der Festwiderstand ($R_{22}$) mit dem Ausgang eines Proportional-Operationsverstärkers (A′₅) verbunden ist, der an seinem nichtinvertierenden Eingang die Bezugsspannung und an seinem invertierenden Eingang über einen Widerstand ($R_{20}$) eine

9

Vorspannung (E) empfängt, wobei ein Widerstand ($R_{21}$) zwischen den Ausgang und den invertierenden Eingang des Operationsverstärkers ($A'_5$) eingefügt ist.

19. Verbesserung nach Anspruch 18, dadurch gekennzeichnet, daß die Widerstände so gewählt sind, das gilt:

$$1 + R_6/R_5 = R_6 \cdot R_{21}/(R_{22} \cdot R_{20})$$

wobei

$R_5$ der Widerstand der negativen Rückkopplungsschleife des Ausgangsverstärkers ($A_4$), und $R_6$ der an den Ausgang des Integralverstärkers ($A_2$) angeschlossene Widerstand ist.

20. Verbesserung nach Anspruch 2, dadurch gekennzeichnet, daß die in Reihe geschalteten Halbleiter-Spannungsstabilisatorschaltungen ($T_1$ bis $T_n$) mit einem Teil der Versorgungsspannung beaufschlagt wird, die in einer allen Halbleiterschaltungen gemeinsamen und zwischen die Versorgungsspannung und den Emitter des Steuertransistors (TC) geschalteteten Widerstandsbrücke ($R'_1$ bis $R'_n$) gebildet wird.

## Claims

1. An improvement relating to a heat regulation device for an enclosure, comprising:
a temperature measuring circuit (A) including a four branch resistor bridge ($R_1$, $R_2$, $R_3$, $R_4$, CTN), at least one branch containing a heat sensitive element ($R_4$, CTN), an output amplifier (Z, $A_4$) comprising an inverting input connected to a first output of the resistor bridge, located at the common point between two bridge branches, and a non-inverting input connected to a second output of the resistor bridge located at the common point between the two other branches, and an output delivering a control signal representative of the difference between the measured temperature of the enclosure and a reference temperature,
a circuit for heating the enclosure, powered by a voltage source and comprising at least one control transistor (TC), whose base is connected to the output of the output amplifier, and whose emitter delivers an adjustable heating current into an emitter resistor ($R_9$), characterized in that said device further comprises a negative DC feedback loop ($R_5$) inserted between on the one hand the common point between the emitter of the control transistor (TC) and its emitter resistor ($R_9$), and on the other hand the inverting input of the ouptput amplifier.

2. An improvement according to claim 1, characterized in that the heating circuit comprises in addition at least one voltage stabilizing semiconductor circuit ($T_1$, $T_2$, $T_n$), which is traversed by a heating current adjustable by the control transistor (TC).

3. An improvement according to claim 1, characterized in that the temperature measuring circuit further comprises a PID-type control circuit inserted between the first output and the second output of the resistor bridge and at least the inverting input of the output amplifier.

4. An improvement according to claim 3, characterized in that the PID-type control circuit comprises three operational amplifiers ($A_1$, $A_2$, $A_3$) mounted in parallel and supplied via a sole voltage of given polarity, wherein

the inverting input of each operational amplifier is connected to the second output of the resistor bridge, said second output delivering a measuring voltage according to a decreasing function of the measured temperature of the enclosure,

the non-inverting or direct input of each operational amplifier is connected to the first output of the resistor bridge, this first output supplying a reference voltage delivered by a generator (1),

the output of each operational amplifier and possibly the output of the generator (1) is connected to the inverting input of the output amplifier ($A_4$),

the first amplifier ($A_1$) is a proportional amplifier,

the second amplifier ($A_2$) is an integrating amplifier, and

the third amplifier ($A_3$) is a differentiating amplifier.

5. An improvement according to claim 4, characterized in that the PID-type control circuit further comprises a fourth operational amplifier ($A_0$) mounted to operate as a follower and receiving the measuring voltage at its non-inverting direct or input and whose output allows to provide the measuring voltage to at least one of the three operational amplifiers ($A_1$, $A_2$, $A_3$) or to the output amplifier ($A_4$).

6. An improvement according to claim 4, characterized in that means ($A_5$, $A'_5$, $R_{22}$, $R_{20}$, $R_{21}$, E) are provided in the temperature measuring circuit for fixing automatically its operating point, independently of the reference voltage.

7. An improvement according to claim 6, characterized in that the means for fixing automatically the operating point of the temperature measuring circuit independently of the reference voltage are constituted by a fixed resistor ($R_{22}$), which is connected to the inverting input of the output amplifier ($A_4$) and biassed by a voltage source ($A'_5$, $R_{20}$, $R_{21}$, $A_5$, E) which depends directly on the reference voltage.

8. An improvement according to claim 7, characterized in that the fixed resistance ($R_{22}$) is connected to the output of a differential amplifier ($A_5$) which receives at its non-inverting input the reference voltage, and at its inverting input a bias voltage (E).

9. An improvement according to claim 8, characterized in that the constant value G of the transfer function of the differential amplifier is chosen such that:

$$G = 1 + R_{22}/R_5 + R_{22}/R_6$$

wherein:

$R_5$ is the resistance of the negative feedback loop of the output amplifier ($A_4$), and

$R_6$ is the resistance of the resistor connected at the output of the integrating amplifier ($A_2$).

10. An improvement according to claim 7, characterized in that the fixed resistance ($R_{22}$) is connected to the output of a P-type operational amplifier ($A'_5$), which receives at its non-inverting input the reference voltage, and at its inverting input a bias voltage (E) via a resistor ($R_{20}$), a resistor ($R_{21}$) being mounted between the output and the inverting input of the operational amplifier ($A_5$).

11. An improvement according to claim 10, characterized in that the resistances are chosen such that:

$$1 + R_6/R_5 = R_6 \cdot R_{21}/(R_{22} \cdot R_{20})$$

wherein:

$R_5$ is the resistance of the negative feedback loop of the output amplifier ($A_4$), and

$R_6$ is the resistance of the resistor connected at the output of the integrating amplifier ($A_2$).

12. An improvement according to claim 3, characterized in that the PID-type control circuit comprises three operational amplifiers ($A'_1$, $A_2$, $A_3$) consisting of an integrating amplifier ($A_2$), and amplifier mounted to operate as a follower-differentiator ($A'_1$) and a proportional amplifier ($A_3$), wherein

the non-inverting direct inputs of the integrating amplifier ($A_2$) and of the proportional amplifier ($A_3$) are each connected to the first output of the resistor bridge, said first output delivering a reference voltage provided by a generator,

the inverting inputs of the integrating amplifier ($A_2$) and of the proportional amplifier ($A_3$) are each connected to the second resistor bridge output delivering a measuring voltage according to a decreasing function of the measured temperature of the enclosure,

the amplifier mounted to operate as a follower-differentiator ($A'_1$) is connected to the output of the proportional amplifier ($A_3$), and

the output of the integrating amplifier ($A_2$), the output of the amplifier mounted to operate as follower-differentiator ($A'_1$), and possibly the output of the generator (1) are connected to the inverting input of the output amplifier ($A_4$).

13. An improvement according to claim 12, characterized in that the PID-type control circuit further comprises a fourth operational amplifier ($A_0$) mounted to operate as a follower and receiving the measuring voltage at its non-inverting direct input and whose output allows to provide the measurement voltage to at least one of the three operational amplifiers ($A'_1$, $A_2$, $A_3$) or to the output amplifier ($A_4$).

14. An improvement according to claim 12, characterized in that means ($A_5$, $A'_5$, $R_{22}$, $R_{20}$, $R_{21}$, E) are provided in the temperature measuring circuit for fixing automatically its operating point, independently of the reference voltage.

15. An improvement according to claim 14, characterized in that the means for fixing automatically the operating point independently of the reference voltage are constituted by a fixed resistor ($R_{22}$), which is connected to the inverting input of the output amplifier ($A_4$) and biassed by a voltage source ($A'_5$, $R_{20}$, $R_{21}$, $A_5$, E) which is a direct function of the reference voltage.

16. An improvement according to claim 15, characterized in that the fixed resistor ($R_{22}$) is connected to the output of a differential amplifier ($A_5$) which receives at its non-inverting input the reference voltage, and at its inverting input a polarization voltage (E).

17. An improvement according to claim 16, characterized in that the constant value G of the transfer function of the differential amplifier is chosen such that:

$$G = 1 + R_{22}/R_5 + R_{22}/R_6$$

wherein:

$R_5$ is the resistance of the resistor of the negative feedback loop of the output amplifier ($A_4$), and

$R_6$ is the resistance of the resistor connected at the output of the integrating amplifier ($A_2$).

18. An improvement according to claim 15, characterized in that the fixed resistor ($R_{22}$) is connected to the output of a proportional operational amplifier ($A'_5$), which receives at its non-inverting input the reference voltage, and at its inverting input a bias voltage (E) via a resistor ($R_{20}$), a resistor ($R_{21}$) being mounted between the output and the inverting input of the operational amplifier ($A'_5$).

19. An improvement according to claim 18, characterized in that the resistances are chosen such that:

$$1 + R_6/R_5 = R_6 \cdot R_{21}/(R_{22} \cdot R_{20})$$

wherein:

R$_5$ is the resistance of the resistor of the negative feedback loop of the output amplifier (A$_4$), and

R$_6$ is the resistance of the resistor connected at the output of the integrating amplifier (A$_2$).

20. An improvement according to claim 2, characterized in that the voltage stablizing semiconductor circuits (T$_1$ to T$_n$) connected in series receive a fraction of the supply voltage obtained from a resistor bridge (R'$_1$ to R'$_n$) common to all of the semiconductor circuits and mounted between the supply voltage and the emitter of the control transistor (TC).

EP 0 256 071 B1

FIG_1

FIG_2

FIG_3

FIG_4

EP 0 256 071 B1

FIG_5